# EUROPEAN PATENT APPLICATION

(11) **EP 2 131 076 A1**
(43) Date of publication of application: **09.12.2009**
(21) Application number: 08425401.0
(22) Date of filing: 05.06.2008
(51) Int. Cl.: F16H 63/20

(54) **Control device for longitudinal transmission**

(71) Applicant: Iveco S.p.A., 10156 Torino (IT)
(72) Inventor: Biglio, Sergio, 10091 Alpignano (IT)
(74) Representative: Borsano, Corrado

(57) **Abstract**

The control device (1) for longitudinal transmissions according to the present invention is characterized by the fact that it comprises a single control rod (10) to which are connected all the gear engagement forks (20, 30, 40, 50) which act on the synchronizers, the forks selectively stopping against a provided gear selector (60) that is also connected to said control rod (10).

The control device according to the present invention allows therefore to considerably simplify the architecture of the devices of the type known, offering a solution suitable to control with a single rod a longitudinal transmission even with six gears plus reverse, the device being at the same time, simple, cheaper and reliable, besides being less bulky and lighter than the devices of the type known.

## Description

### FIELD OF THE INVENTION

The present invention relates to an internal control device for a longitudinal transmission, in particular for the transmission of a light industrial vehicle.

### DESCRIPTION OF THE PRIOR ART

In the field of vehicles, in particular of industrial vehicles, transmissions of the longitudinal type are commonly used. In this type of transmission, the control rod is rotated in order to select groups (pairs) of gears and is translated in order to engage a gear. The former of these movements corresponds to the driver's action on the selector lever from the neutral position with a displacement towards the left or towards the right (typically in order to select between the pairs 1^{st}-2^{nd}, 3^{rd}-4^{th}, 5^{th}-6^{th}, reverse gear), or without this shift for the pair 3^{rd} and 4^{th}, the latter of these movements corresponds to the engagement of one of the gears in the pair. In any case, the selection movement precedes the engagement movement.

In the longitudinal transmissions, the presence of more than one command and selection rod is known in the art.

In particular, as the number of gears increases, the complexity of the transmission control device increases. At present, longitudinal transmission with six gears plus reverse gear are known in the art. In order to control the selection and the engagement of the gears, these transmissions have a first control rod which develops in the longitudinal direction of the transmission, and a number of secondary selection and engagement rods which are longitudinally placed as well. In particular, in six-gear-plus-reverse transmission, possibly with the sixth gear in overdrive, there are up to four engagement rods besides the main control rod.

In fact, it known that the engagement forks, possibly floating, of the different gears are connected to each secondary rod.

Therefore as the number of gears increases, the complexity of the transmission structure increases, and will include numerous elements having also a complex shape.

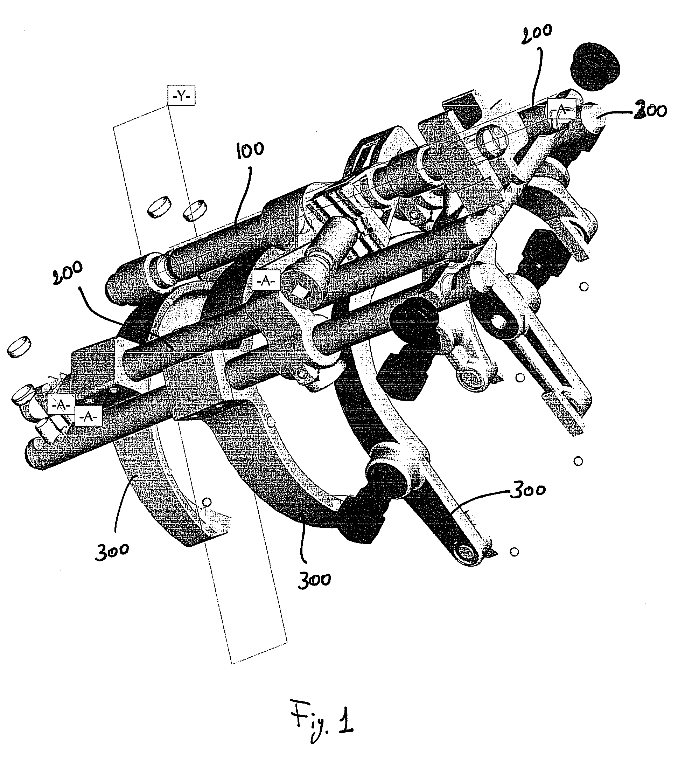

Figure 1 shows an example of six-gear-plus-reverse longitudinal transmission known in the art and used, at present, especially on light industrial vehicles.

As shown in the figure, the transmission of the type known has the structure described above wherein, in addition to the main control rod 100, there are four secondary rods 200 of the gear selection forks.

The gear lever acts directly on the main control rod 100 O by means of a connection made of cables, therefore the rotation and the translation of the control rod 100 determines the selection and the engagement of the different gears, by transmitting the engagement movement of the secondary rod 200 connected to the fork 300 corresponding to the desired gear.

It is evident that the control rods' structure of this type of longitudinal transmission is, therefore, very complex. The numerous control rods and structural elements make the manufacturing costs of this transmission increase. The control rods, the support elements and the elements for the transmission of the motion from the main rod to the gear selectors are made by means of machine tools, and this makes this type known of control device very expensive.

Besides being expensive, the gear change control device with many rods is also quite bulky, and heavy.

Overall dimensions and weight are two aspects that it is necessary to keep under control and to reduce as much as possible. In particular the dimensions negatively affect the possibility to house the transmission in a compact transmission case, which therefore may be easily connected to the power unit of a light vehicle. In particular, compact dimensions allow the association of the same transmission to different power units with in a easier and more versatile way.

Another extremely important aspect is the necessity to reduce the weight. The control device with many rods of the type known, having, as said, numerous elements and therefore a rather complex structure, is characterized by a considerable weight. In particular, the longitudinal transmissions this invention refers to, are suitable to equip medium industrial vehicle, which are designed to transport above all goods and possible passengers. As regulations impose a maximum admissible weight, for example 3.5 tons, it is clear that the lower is the overall weight, the higher is its load capacity. For this reason it is important that every on-board component and every mechanical detail is designed and realized with a particular attention to weight saving.

The main task of the present invention is to solve or, anyway, to reduce the drawbacks left unsolved by the transmissions of the type known.

In particular, in the scope of this task, the aim of the present invention is to provide a control device of a transmission, having a simplified architecture. More in particular, the aim of this invention is to provide a control device for a longitudinal transmission comprising a low number of components, as to have a simpler and cheaper manufacturing, and which is also lighter, more reliable, and less bulky.

### SUMMARY OF THE INVENTION

This task, and these and other purposes that will be explained hereinafter, are achieved by a control device for a vehicle longitudinal transmission, **characterized in that** it comprises a single control rod to which a selector is connected, and on which a number of gear engagement forks are grafted, each of said forks being connected to said selector for the gear selection and engagement by means of a control tine.

### LIST OF THE FIGURES

Further characteristics and advantages of the present invention will become clear from the following detailed description, that is merely illustrative and not limitative and is shown in the figures that are attached hereto, in which:
figure 1 shows a control device of the type known, that is representative of the state of the art control devices for the six-gear-plus-reverse longitudinal transmissions;
figure 2 shows an overall perspective view of the control device according to the present invention;
figure 3 shows the same overall perspective view of the control device of figure 2 in a longitudinal section;
figure 4 shows a detail, in partial cross section, of the selector of the device according to the present invention;

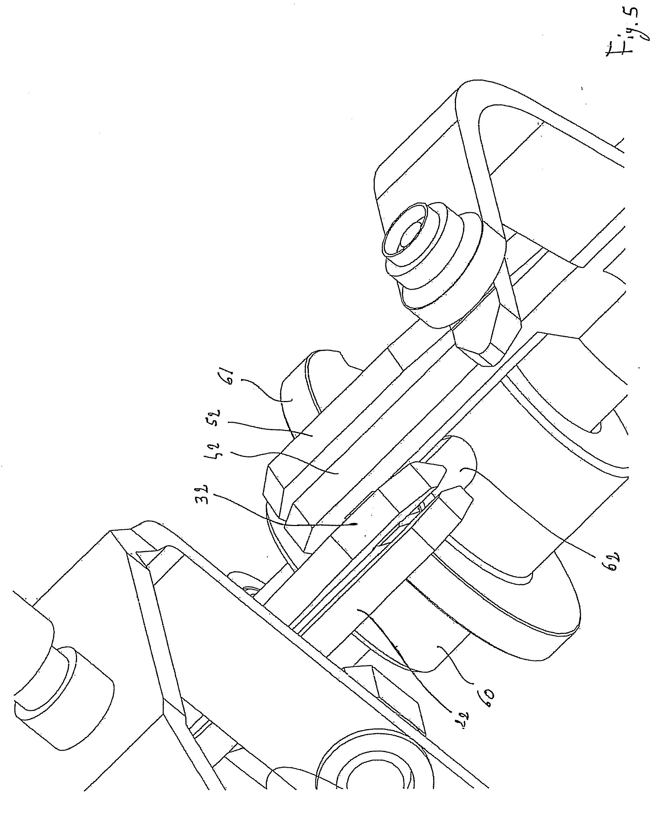

figure 5 shows another detail of the selector according to this invention in a perspective view from the bottom.

### DETAILED DESCRIPTION OF AN EMBODIMENT OF THE INVENTION

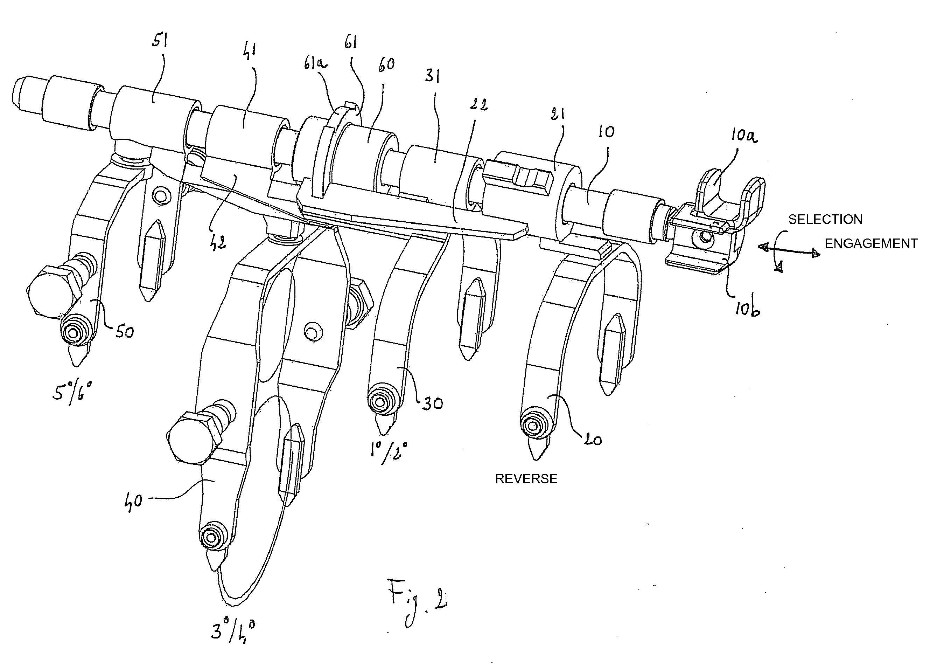

With particular reference to figure 2, the control device 1 for the longitudinal transmission according to this invention comprises a main control rod 10 connected by means of appropriate motion transmission means 10a and 10b to the leverages or cables connected to the gear lever.

The motion transmission means 10a and 10b are such that they can selectively transmit a rotational or a translational movement to the control rod 10.

In particular, the rotational movement of the rod around its longitudinal axis corresponds to the gear selection movement, while the translational movement of the rod in axial direction corresponds to the gear engagement movement, as it is explained below.

The numerous gear engagement forks are grafted on said control rod 10. As it is known, the forks 20, 30, 40, 50 selectively transmit the gear engagement movement to the gear wheels of the transmission.

Each of said forks 20, 30, 40, 50 is associated to said control rod 10 by means of support and selection elements.

Said support and selection elements comprise, in the embodiment provided which is merely illustrative, at least a hub 21, 31, 41, 51 for the connection to said control rod 10 and at least a tine 22, 32, 42, 52 for the selection or the blockage of the fork.

An extremity of each of said tines 22, 32, 42, 52 is connected to the corresponding hub 21, 31, 41, 51 which grafts the fork on said control rod 10, while the other extremity is grafted on a gear selector 60.

Said gear selector 60 cannot translate because it is held by elements integral with the transmission case that are not shown in the figures, while it is free to rotate integrally with the control rod 10.

According to what shown in figures from 2 to 5, the fork indicated by the reference number 20 selects the reverse gear, the fork 30 controls the 1^{st} and the 2^{nd} gear ratio, the fork 40 controls the 3^{rd} and the 4^{th} and the fork 50 controls the 5^{th} and the 6^{th}.

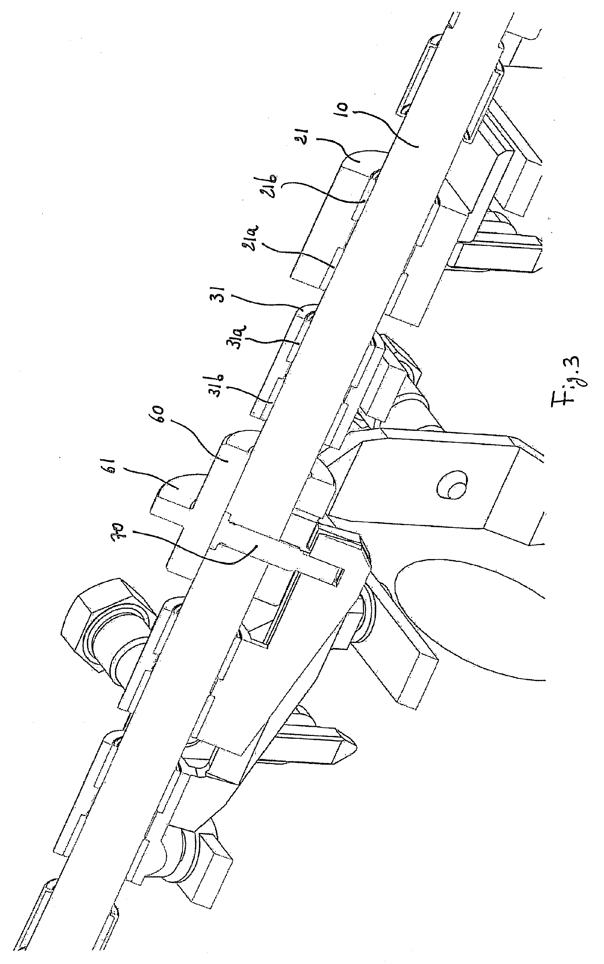

As it is seen in particular in figures 2 and 3, each fork, for example the 20, is connected to said gear selector 60 by means of support and selection elements which comprise the hollow hub 21 by means of which the fork 20 is supported by the control rod 10, and a tine 22 which connects such hollow hub 21 to the gear selector 60.

Therefore from each fork and, more in detail, from each support hub, the tine grafted on the gear selector 60 branches off.

Each hub 21, 31, 41, 51 will be appropriately mounted on provided ball-bearings 21a, 21b, 31a, 31b so that the control rod 10, axially inserted into said hubs, may axially slide and rotate around its axis without transmitting the motion to said hubs.

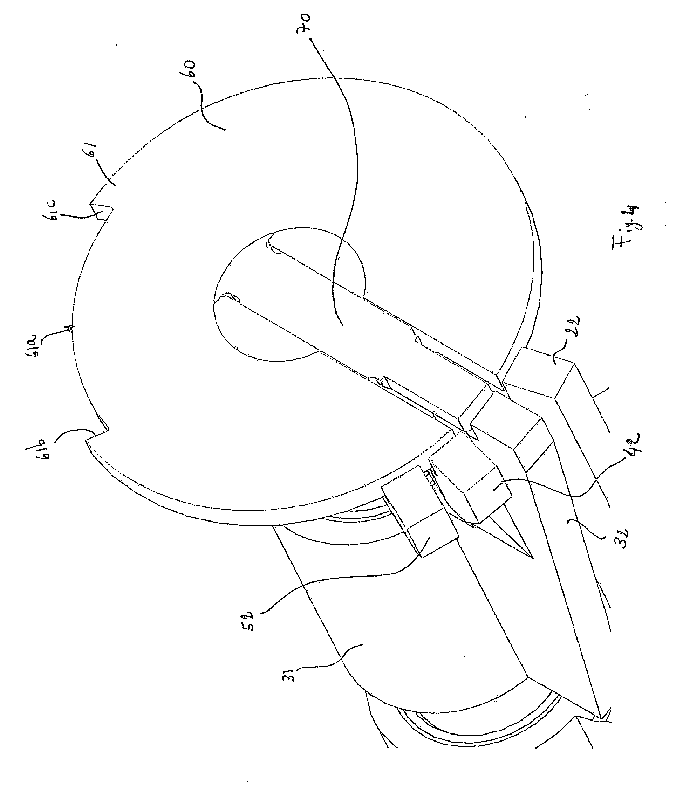

With particular reference to figures 3, 4 e 5, the gear selector 60 is constituted by an axially hollow cylinder comprising a circular profile 61 which radially stretches out toward the outside and which advantageously comprises a peripheral groove 61a which defines two limit stop teeth 61b and 61c which limit the rotation of the control rod 10.

The gear selector 60 rotates integrally with the control rod 10 and a gear engagement pin 70 is inserted integrally with said control rod at level with said selector 60 stretching out toward the outside from said gear selector 60 through an appropriate slot 62 on the external surface of said gear selector, said slot having a substantially longitudinal development

The assembling of the device is such that the tines of the various forks are inserted on the selector 60 in correspondence of said gear engagement pin 70, that is near said groove 62 on the external surface of said selector.

As shown in figure 4, for example, the tines 22, 32, 42, 52 of the forks of the different gears are placed side by side, leaning out toward the selector 60, and are all grouped around the gear engagement pin 70. This way, with a little rotation of the control rod 10 the pin may interact with all the tines and therefore may select and engage any gear ratio. According to this invention, the control device according to this invention functions as follows.

By means of the motion transmission means 10a and 10b connected to the control rod 10 the movement of the gear lever is transferred to the control rod 10. This movement may be the rotation of the rod 10 around its longitudinal axis and the axial translation of the rod in both directions.

In this transmission case position, the control rod is always connected by means of said gear selector 60 to the tines 22, 32, 42, 52 respectively of the forks 20, 30, 40, 50.

The extremities of each of said tines opposite to those connected to the hubs 21, 31, 41, 51 that support the forks stops against the circular profile 61 of said selector 60, except for the tine that is placed in correspondence of the slot 62 on said selector. This tine direcly stops against the pin 70, and a translational movement of the control rod 10 drags the engagement pin 70 which pulls the tine which stops against it and engaging, this way, the relative gear.

Figure 4 shows, as an example, the situation wherein the hub 31 supporting the fork 30 corresponding to the 1^{st}-2^{nd} gear has its tine 32 placed in correspondence of the pin 70.

As shown in the figure, the circular profile 61 of the selector 60 blocks all the other tines 22, 42 and 52 preventing their movement. Thus in any situation the gear selector 60 allows the pin 70, integral with the control rod 10, to interact with a single tine and therefore with a single fork, while the other non-selected tines, and therefore the other forks, are blocked in their axial movement by the circular profile 61.

Advantageously, it has been shown that the circular profile 61 may further comprise a groove 61 suitable for defining two teeth 61b and 61c suitable for acting as a limit stop for the rotation of the selector 60.

The limits to the rotation of the selector 60, in actual fact, limit also the rotation of the control rod 10, this limitation being necessary in order to allow the gear engagement pin 70 to rotate between an initial position wherein the pin 70 interacts with a first tine, and a final position wherein said pin 70 interacts with the last tine, passing through all the intermediate positions that allow the interaction of the pin with the different tines. In actual fact, the limit stop teeth 61b, 61c prevent extra rotations of the control rod, and therefore limit the stroke in lateral direction of the gear lever.

As said, the gear engagement pin 70 is integral with the control rod 10. The rotation of the control rod 10, therefore, causes the selection of the gear. In particular, the transmission according to present invention will be appropriately equipped with floating forks as to maintain the H configuration of the movement of the gear lever which is usual for the user. Therefore the pair of gears on the same fork are selected by means of the rotation of the control rod, and are engaged by means of its translation.

Thus, for example, a rotation of the control rod 10, which brings the pin 70 to interact with the tine 32 integral with the hub 31 which supports the fork 30, select the 1^{st} or 2^{nd} gear ratios. Only the following longitudinal translation of the rod, and therefore the pin 70 which may freely slide thanks to the presence of the longitudinal slot 62, both in a direction and in its opposite direction, provokes the engagement of the gear itself, in this case the 1^{st} or 2^{nd} gear ratio.

The internal control device according to the present invention, therefore, activates all the forks with a single selector associated to a single control rod.

The internal control device according to the present invention, shown with the help of the figures that are attached hereto, which are merely illustrative and not limitative, allows to control a six-gear-plus-reverse transmission with an extremely simple architecture.

Advantageously, it is possible to use the internal control device according to present invention with particular advantages in terms of dimensions and of weight of industrial vehicles, in particular of the light industrial vehicles that often have a six-gear transmission, and possibly also a transmission with the sixth gear in overdrive, plus reverse.

Therefore it has been shown that the internal control device for longitudinal transmission according to the present invention achieves the purpose and the objects proposed.

In particular, it has been shown that the internal control device for longitudinal transmission according to the present invention is extremely simplified with respect to the devices known in the art, and requires less components.

More in detail, the internal control device for longitudinal transmission according to the present invention requires a single control rod, and therefore is simpler with respect to the pluri-rod devices known in the art. Therefore it has been shown that the control device according to the present invention has extremely less details than the devices known in the art and has therefore a cheaper construction and assembling.

Also, this simpler control device according to the present invention allows to obtain a transmission which is also more reliable that the transmissions of the type known.

Not least, it has been shown that the control device according to the present invention is extremely small, by using a single control rod instead of the numerous rods, main and secondary, of the devices of the type known.

It has therefore been shown that the control device for longitudinal transmission according to the present invention has compact dimensions and light overall weight, advantages that are extremely important for the assembling of the transmission on the vehicle.

## Claims

1. Internal control device (1) for a vehicle longitudinal transmission, **characterized in that** it comprises a single control rod (10) to which at least a gear selector (60) is connected and on which a number of forks (20, 30, 40, 50) are grafted in order to engage the different gears, each of said forks (20, 30, 40, 50) being connected to said control rod (10) and to said gear selector (60) by means of appropriate support and selection means.

2. Control device (1) according to the previous claim, **characterized in that** said support and selection means comprise for each fork at least a hollow hub (21, 31, 41, 51), said control rod (10) grafting axially on said hollow hub mounted in neutral on it, and at least a control tine (22, 32, 42, 52) for the selection and the blocking of the fork which has an extremity connected to said hollow hub (21, 31, 41, 51) and the other extremity selectively associated to said gear selector (60).

3. Control device (1) for transmission according to any of the previous claims, **characterized in that** said gear selector (60) is made by a hollow cylinder, said hollow cylinder being rotationally integral with said control rod (10) which is free to axially slide with respect to it.

4. Control device (1) for transmission according to any of the previous claims, **characterized in that** said gear selector (60) has at least a circular profile (61) radially stretching out toward the outside and suitable to function as a limit stop for said control tiles (22, 32, 42, 52).

5. Device (1) according to any of the previous claims, **characterized in that** it further comprises at least a gear engagement pin (70) integral with said control rod (10) and placed in correspondence to said gear selector from which it stretches out toward the outside through a slot (62) on the external surface of said selector (60) having an elongated shape in longitudinal direction.

6. Device (1) according to any of the previous claims, **characterized in that** said gear selector (60) is constrained to the gear box, and it can only rotate around its longitudinal axis in an integral way with respect to said control rod (10).

7. Device (1) according to one or more of the previous claims, **characterized in that** said tines (22, 32, 42, 52) of the forks of the different gears are placed side by side leaning out toward the selector (60), and they stop against said circular profile (61) around the gear engagement pin (70).

8. Control device (1) according to the previous claim, **characterized in that** said gear engagement pin (70) may rotate integrally with said control rod (10) and with said gear selector (60) stopping against only one of said tines at a time, while the other tines stop against said circular profile (61) of said selector and are therefore blocked with respect to the translation in longitudinal direction.

9. Control device (1) for transmission according to any of the previous claims, **characterized in that** a rotation of the control rod (10) around its axis causes the engagement of a gear or of a pair of gears controlled by the same fork, by means of the alignment of said pin (70) rotationally integral with said selector (60) to the tine connected to said fork.

10. Control device (1) for transmission according to any of the previous claims, **characterized in that** a longitudinal translation of said control rod (10) and therefore of said gear engagement pin (70) that is integral to it and is slidingly associated to said selector (60), provokes the corresponding translation of the tine against which it stops, determining the engagement of the selected gear.

11. Control device (1) according to one or more of the previous claims, **characterized in that** said circular profile (61) of said selector (60), further comprises a groove (61a) suitable for defining two teeth (61b, 61c) suitable to function as an end of the stroke limit stop for the rotation of the selector (60) and therefore of the control rod (10).
